# FASCICULE DE BREVET EUROPEEN

(11) **EP 2 007 544 B1**
(45) Date de publication et mention de la délivrance du brevet: **23.01.2013**
(21) Numéro de dépôt: 07731862.4
(22) Date de dépôt: 03.04.2007
(51) Int. Cl.: B23K 20/12

(54) **PROCEDE DE SOUDAGE PAR FRICTION MALAXAGE AVEC UN DISPOSITIF A PION RETRACTABLE AVEC RETRACTION LE PION RETRACTABLE EN FIN DE TRAJECTOIRE**
REIBRÜHRSCHWEISSVERFAHREN UNTER VERWENDUNG EINER EINRICHTUNG MIT EINEM ZURÜCKZIEHBAREN STIFT UND ZURÜCKZIEHEN DES STIFTES AM ENDE DER GESCHWEISSTEN BAHN
FRICTION STIR WELDING PROCESS USING A DEVICE WITH A RETRACTABLE PIN WITH RETRACTION OF THE RETRACTABLE PIN AT THE END OF THE WELDED PATH

(30) Priorité: 20.04.2006 FR 0651383
(43) Date de publication de la demande: 31.12.2008
(73) Titulaire: European Aeronautic Defence and Space Company EADS France, 75781 Paris Cedex 16 (FR); EADS CCR, 75781 Paris Cedex 16 (FR)
(72) Inventeur: MARIE, François, 92500 Rueil-Malmaison (FR)
(74) Mandataire: Lebrette, Camille
(86) Numéro de dépôt international: PCT/FR2007/051059
(87) Numéro de publication internationale: WO 2007/122338

(56) Documents cités:
- JP-A- 10 071 478
- JP-A- 10 193 140
- JP-A- 11 197 856
- US-A- 5 893 507

## Description

L'invention concerne un procédé de réalisation d'un joint soudé par friction malaxage conformément au préambule de la revendication 1 (voir, par exemple, JP 101 193 140 A). Plus précisément l'invention concerne un tel procédé de soudage permettant de souder deux panneaux accolés l'un contre l'autre sur tout ou partie de leur surface de contact. L'invention trouve des applications notamment dans l'industrie aéronautique pour le soudage de tôles, de raidisseurs etc.

Le soudage par friction est un procédé de soudage mécanique où la chaleur nécessaire pour le soudage est fournie en frottant ou en mettant en rotation l'une contre l'autre les pièces à assembler sous une pression axiale.

Afin de pouvoir souder l'une à l'autre des pièces relativement encombrantes, qui ne peuvent pas être facilement mises en rotation, il est connu d'utiliser le soudage par friction malaxage. Le soudage par friction malaxage utilise un dispositif rotatif, comportant un pion profilé et un épaulement. Le pion est enfoncé dans la matière des pièces à souder jusqu'à ce que l'épaulement touche la surface du matériau à souder. La matière est chauffée par friction à des températures où elle est facilement déformable. Lorsque le dispositif de soudage avance, la matière s'écoule de l'avant vers l'arrière de la trajectoire du pion pour former un joint soudé. Par avant et arrière, on entend par rapport au sens d'avancement du dispositif de soudage pendant ladite opération de soudage. Par joint soudé, on entend le matériau des surfaces à souder, déplacé lorsqu'il est à l'état pâteux par l'avancement du pion du dispositif de soudage.

Le procédé de soudage par friction malaxage possède, de par sa nature, de nombreux avantages. Notamment, le procédé ne nécessite l'apport d'aucun matériau additionnel, tel que du gaz ou du métal. Par ailleurs, dans la mesure où ledit procédé opère en phase pâteuse, il n'y a pas fusion de la matière des pièces à souder. Aussi les déformations sont faibles et les risques de soufflure, fissuration à chaud, inclusion etc. sont considérablement diminués. De plus, dans la mesure où les températures atteintes restent inférieures au point de fusion des matériaux à souder, les caractéristiques mécaniques de l'assemblage final sont élevées et dans la plupart des cas supérieures à celles obtenues avec des procédés de soudage traditionnels.

Cependant, la finition du joint soudé obtenu en utilisant le procédé de soudage par friction malaxage tel qu'il est connu actuellement peut ne pas être satisfaisante.

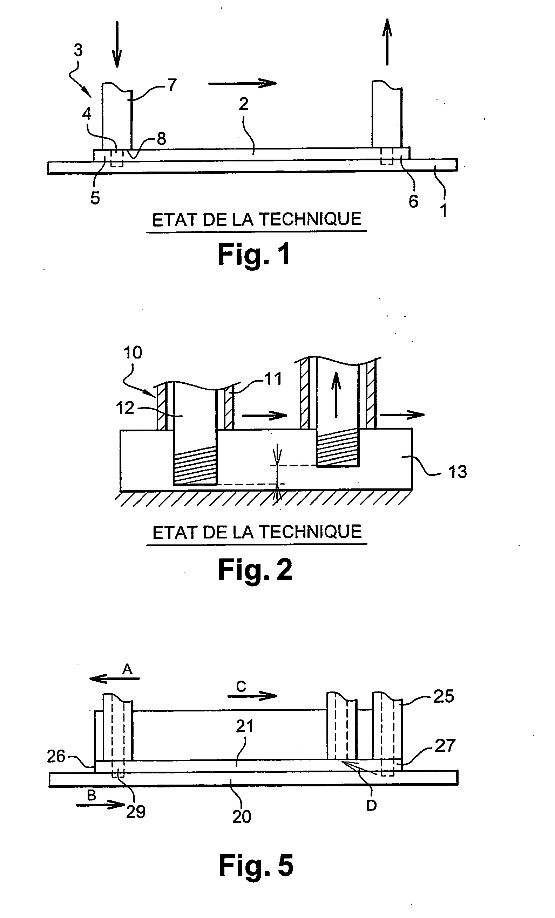

En effet, comme cela est représenté sur la figure 1 de l'état de la technique, le joint soudé ne peut pas parcourir d'un bord à l'autre la zone de recouvrement des panneaux à souder, respectivement inférieur 1 et supérieur 2, car la matière à l'état pâteux pourrait s'écouler au bord du panneau supérieur 2 si le joint soudé était initié ou terminé sur ou en deçà ou au-delà d'un bord dudit panneau supérieur. Par panneau, on entend toute pièce munie d'une surface étendue et de faible épaisseur en regard des autres dimensions du panneau.

Le panneau supérieur 2 recouvre donc au moins partiellement le panneau inférieur 1, de sorte qu'au moins une portion d'une surface du panneau inférieur 1 est recouverte à proximité de chaque extrémité du joint soudé par une portion d'une surface du panneau supérieur 2 sans joint soudé.

Un dispositif de soudage 3 par friction malaxage est utilisé pour souder les deux panneaux 1, 2. Le dispositif de soudage 3 est muni d'un pion 4 en saillie sur un épaulement 8 du corps 7 dudit dispositif de soudage 3. Le pion 4 est une excroissance fixe par rapport au corps 7 du dispositif de soudage 3. Le dispositif de soudage 3 est mis en rotation rapide et vient frotter sur les deux panneaux 1 et 2 positionnés et maintenus dans la position d'assemblage voulue par des outillages non représentés. La friction du dispositif de soudage 3 sur les panneaux 1, 2 se transforme en chaleur et provoque un ramollissement de la matière desdits panneaux 1, 2, qui entre alors localement dans un état pâteux. Le pion 4 a une longueur adaptée pour pénétrer dans le plan de joint, à l'interface entre les panneaux supérieurs 2 et inférieur 1 à souder. Le pion 4 au cours de son mouvement de rotation et de sa translation mélange intimement les matières des deux panneaux 1, 2, par une opération combinée de forgeage et d'extrusion des dites matières. L'assemblage s'effectue de proche en proche.

Du fait des risques d'écoulement de la matière ramollie de l'avant vers l'arrière du pion 4, il n'est pas possible de faire débuter le soudage par friction malaxage au niveau de l'extrémité arrière 5 du panneau supérieur 2, ni de terminer ledit soudage exactement au niveau de l'extrémité avant 6.

Par ailleurs, en fin de soudage, il est nécessaire de retirer le dispositif de soudage 3. Ainsi lors du retrait, le pion 4, au niveau de l'extrémité avant du joint soudé obtenu, laisse une empreinte, ou trou de soudure, dans les panneaux 1, 2 soudés. La présence de ce trou de soudure fragilise la liaison entre les deux panneaux 1 et 2. De plus, les risques de corrosion et de fissuration à l'endroit du trou de soudure sont accrus.

Pour supprimer le trou de soudure en fin de joint soudé, les panneaux soudés sont généralement réalisés avec des dimensions supérieures aux dimensions voulues, puis lesdits panneaux sont coupés après leur assemblage en ayant pris soin de terminer la soudure dans une des zones qui sera éliminée avec le trou de soudure.

Dans le cas d'une soudure bord à bord, et lorsque le joint soudé suit une trajectoire qui se referme sur elle-même, il n'est pas possible de supprimer le trou de soudure par élimination de la zone des panneaux où se forme le trou de soudure. Dans ce cas, il est connu d'utiliser un dispositif de soudage 10 par friction malaxage, dont un détail est représenté sur la figure 2 de l'état de la technique, qui est muni d'un pion 12 rétractable.

Le dispositif de soudage 10 comporte au moins deux parties. Une première partie 11 forme l'épaulement destiné à générer par friction la chaleur nécessaire au soudage. La seconde partie est constituée par le pion rétractable 12 qui est monté mobile suivant l'axe de rotation du dispositif de soudage 10 à l'intérieur de l'épaulement 11. Le pion rétractable 12 peut ainsi, sur commande, être plus ou moins enfoncé dans le plan de joint, c'est-à-dire pénétrer plus ou moins profondément dans l'épaisseur des panneaux adjacents bord à bord. Lorsque la trajectoire de l'outil de soudage 10 revient à son point de départ après avoir parcouru une trajectoire qui se referme sur elle-même, l'utilisateur du dispositif de soudage par friction malaxage 10 provoque la rétraction progressive du pion rétractable 12, de manière à ce que le pion rétractable 12 soit entièrement rétracté avant que l'épaulement 11 ne soit plus en contact avec la surface du panneau.

Il est bien sûr possible d'utiliser un dispositif de soudage 10 pourvu d'un pion rétractable 12 pour réaliser un joint soudé suivant une ligne ouverte, mais dans ce cas le joint soudé obtenu est de moins bonne qualité au niveau de l'extrémité soudée au niveau de laquelle le pion a été rétracté, les caractéristiques du joint soudé étant dégradées dés lors que le pion pénètre moins profondément dans l'épaisseur des panneaux.

En effet, et comme cela est visible sur la figure 2, au fur et à mesure de la rétraction du pion 12, la profondeur de pénétration du pion rétractable 12 dans l'épaisseur du panneau 13 est de plus en plus faible puis devient nulle, de sorte que la quantité de matière du panneau 13 malaxée et mélangée à la matière du panneau adjacent bord à bord est de plus en plus faible. La solidité du joint soudé obtenu est donc également de plus en plus faible. L'extrémité concernée du joint soudé, et des panneaux, est affaiblie et le problème rencontré avec le procédé de soudage mettant en oeuvre un dispositif de soudage 3 comportant un pion fixe 4 n'est pas résolu. Lorsque les pièces à souder ont leurs dimensions définitives avant l'opération de soudage et qu'elles ne peuvent pas être recoupées au niveau du joint soudé obtenu, il s'ensuit un affaiblissement des pièces soudées obtenues.

Dans l'invention, on cherche à améliorer le procédé de soudage par friction malaxage de l'état de la technique. Notamment, on cherche à fournir un procédé de soudage par friction malaxage de deux panneaux permettant de supprimer le trou de soudure en fin de joint soudé, tout en garantissant une bonne qualité du joint soudé sur toute sa longueur. Par longueur du joint soudé, on entend la dimension dudit joint s'étendant depuis l'extrémité arrière dite de début jusqu'à l'extrémité avant dite de fin du joint soudé. Par extrémité avant, ou fin de joint soudé, on entend la portion de joint soudé obtenue à la fin du procédé de soudage.

Pour cela, dans l'invention, on utilise un dispositif de soudage par friction malaxage muni d'un pion rétractable dont la trajectoire est étendue au delà de l'extrémité avant du joint soudé et dont le pion rétractable est rétracté sur une portion de la trajectoire qui commence ou non dans la zone du joint soudé et s'étend au delà de l'extrémité avant du joint soudé. Le procédé peut être associé à la réalisation préalable sur un panneau supérieur, panneau dont la face libre est parcourue par le dispositif de soudage, d'un bord progressivement aminci de son extrémité avant, au niveau de laquelle doit se terminer le joint soudé. Par amincissement progressif, on entend que l'extrémité avant présente des variations d'épaisseur, de manière à diminuer progressivement l'épaisseur du panneau depuis l'épaisseur initiale jusqu'à une épaisseur nulle. Par exemple, l'extrémité avant du panneau supérieur est munie d'un chanfrein formant un biseau. L'extrémité avant peut autrement être munie d'une succession de paliers reliés ou non par des chanfreins. Au fur et à mesure de l'avancement du dispositif de soudage par friction malaxage sur le panneau supérieur, au niveau de l'extrémité avant amincie, on fait se rétracter le pion rétractable, tout en maintenant par exemple une profondeur d'enfoncement sensiblement constante dans le panneau inférieur. On obtient ainsi, en gérant la saillie et la rétraction du pion rétractable du dispositif de soudage, une pénétration sensiblement constante dans l'épaisseur du panneau inférieur. L'épaisseur de matière du panneau inférieur participant à la formation du joint soudé est alors la même sur toute la longueur du joint soudé. Les caractéristiques mécaniques du joint soudé sont donc homogènes et les panneaux soudés ne sont pas dégradés.

Afin de réaliser un joint soudé sur toute la longueur souhaitée sans qu'un trou de soudure ne persiste en fin de soudage, l'invention a donc pour objet un procédé de réalisation d'un joint soudé par friction malaxage de deux panneaux conformément à la revendication 1.

Dans ce cas le pion rétractable est rétracté en fonction de la position du dispositif de soudage sur le bord avant aminci pour conserver une profondeur voulue de pénétration dans le panneau inférieur.

En particulier est rétracté pour maintenir une profondeur sensiblement constante de malaxage dans l'épaisseur du panneau inférieur entre l'extrémité de début et l'extrémité de fin de joint soudé.

Dans un mode particulier de mise en oeuvre du procédé le bord avant est aminci au moyen d'un biseau, lequel biseau a une longueur de préférence comprise entre 5 et 15 fois l'épaisseur du panneau supérieur afin de limiter les risques d'écoulement de la matière amenée à l'état pâteux par l'opération de soudage.

Pour assurer l'apport correct d'énergie par friction l'axe du dispositif de soudage est orienté pour être maintenu sensiblement perpendiculaire à la surface de contact avec l'assemblage des panneaux en tout point de la trajectoire dudit dispositif de soudage en particulier sur le bord aminci.

De manière alternative le sens de déplacement du dispositif de soudage est modifié de telle sorte que la portion de trajectoire suivie par le dispositif de soudage s'étendant au-delà de l'extrémité de fin du joint soudé se situe dans la région de la zone de recouvrement des deux panneaux à souder.

Dans ce cas le pion rétractable est avantageusement rétracté, depuis sa position à la fin du joint soudé, au cours de la portion de trajectoire suivie par le dispositif de soudage après la fin du joint soudé. Le pion rétractable peut également être ressorti vers l'extérieur pour assurer le malaxage des matériaux des panneaux, par exemple sur une portion du joint soudé déjà réalisé, sur au moins une partie de la portion de trajectoire suivie par le dispositif de soudage depuis l'extrémité de fin de joint soudé avant de rétracter le pion rétractable pour éviter la formation d'un trou de soudure.

Pour améliorer la qualité du joint soudé à son extrémité par laquelle le joint est commencé, et en particulier pour réduire au maximum la longueur non soudée ou dont les caractéristiques de la soudure ne seraient pas optimales, le procédé comporte en outre une étape au cours de laquelle la trajectoire du dispositif de soudage entre l'extrémité de début de joint soudé et l'extrémité de fin de joint soudé est précédé par une portion de trajectoire prenant origine en un point de contact dudit dispositif de soudage avec l'un ou les panneaux en cours d'assemblage et aboutissant à l'extrémité de début de joint soudé.

Ledit point de contact du dispositif de soudage est choisi dans une zone découverte avant du panneau inférieur.

Avantageusement lé panneau supérieur comporte un bord arrière, situé sur le bord dudit panneau du côté de l'extrémité de début du joint soudé, progressivement aminci, par exemple au moyen d'un biseau dont la longueur est avantageusement comprise entre 5 et 15 fois l'épaisseur du panneau supérieur.

Dans ces cas le pion rétractable est ressorti en fonction de la position du dispositif de soudage sur le bord arrière aminci pour conserver une profondeur voulue de pénétration dans le panneau inférieur.

En outre l'axe du dispositif de soudage est orienté pour être maintenu sensiblement perpendiculaire à la surface de contact avec l'assemblage des panneaux en tout point de la trajectoire dudit dispositif de soudage sur la portion de trajectoire entre le point de contact dudit dispositif de soudage avec l'un ou les panneaux et la zone de la trajectoire ou l'épaisseur du panneau supérieur est sensiblement constante

Le procédé de soudage selon l'invention est avantageusement mis en oeuvre pour le soudage d'un panneau allongé, par exemple dont le rapport entre la longueur et la largeur est au moins égal à 10, tel qu'un raidisseur structural, sur un panneau de grandes dimensions dont la largeur est de même ordre de grandeur que la longueur, tel que par exemple un panneau de revêtement d'une structure telle qu'un fuselage d'aéronef.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : Une représentation schématique d'un dispositif de soudage par friction malaxage à pion fixe de l'état de la technique, déjà décrit précédemment ;
- Figure 2 : Une représentation schématique d'un dispositif de soudage par friction malaxage à pion rétractable de l'état de la technique, déjà décrit précédemment ;
- Figure 3a et 3b : Deux représentations schématiques d'un dispositif de soudage par friction malaxage pour souder deux panneaux non couvert par l'invention, dans lesquelles la rétraction finale du pion rétractable se situe au niveau d'une extrémité soudée ;
- Figure 4a et 4b : Deux représentations schématiques d'un dispositif de soudage par friction malaxage pour souder deux panneaux selon l'invention, dans lesquelles la rétraction finale du pion rétractable est située au niveau de la zone de recouvrement des panneaux.
- Figure 5 : Une autre représentation schématique d'un dispositif de soudage par friction malaxage pour souder deux panneaux non couvert par l'invention, dans laquelle la rétraction finale du pion rétractable est située au niveau de la zone de recouvrement des panneaux.

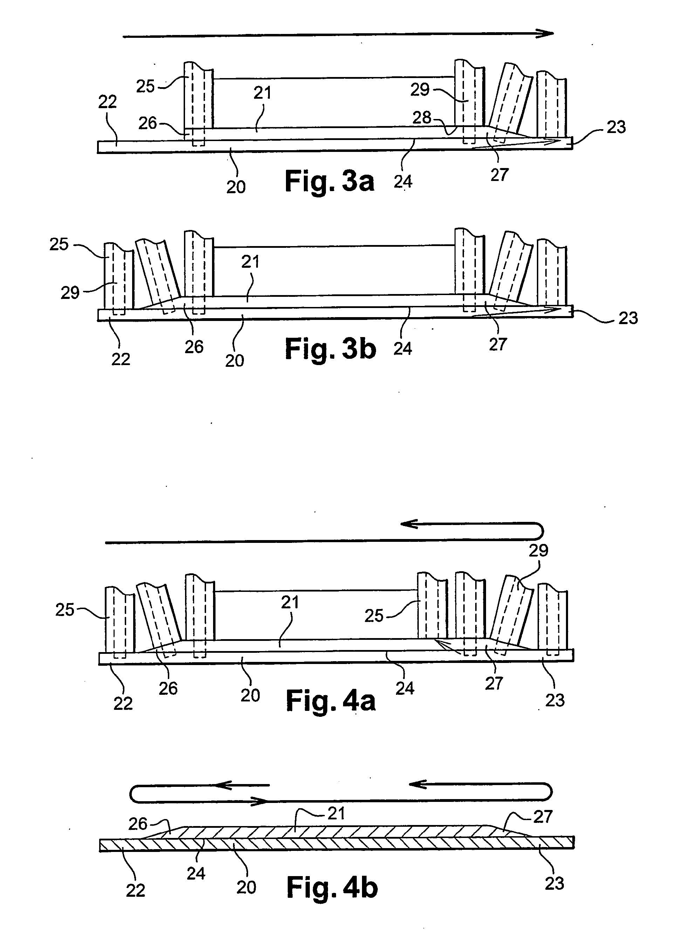

Sur la figure 3a est représenté un panneau inférieur 20 recouvert au moins partiellement par un panneau supérieur 21. Par panneau supérieur, on entend le panneau qui est soumis directement à l'action d'un dispositif de soudage par friction malaxage sur une de ses faces, dite face supérieure. Par panneau inférieur, on entend le panneau situé sous la face inférieure du panneau supérieur, opposée à la face du panneau supérieur directement soumise à l'action du dispositif de soudage.

Le panneau inférieur 20 correspond par exemple au panneau constituant le revêtement extérieur d'une structure tel qu'un fuselage d'aéronef et le panneau supérieur 21 à la semelle d'un raidisseur devant être fixé audit revêtement. Le panneau inférieur 20 étant de dimensions strictement supérieures aux dimensions du panneau supérieur 21, le panneau inférieur 20 comporte une zone découverte arrière 22, située en amont de la zone de recouvrement 24 et une zone découverte avant 23, située en aval de la zone de recouvrement 24. Par zone de recouvrement, on entend la zone dans laquelle le panneau supérieur 21 recouvre le panneau inférieur 20. Par amont et aval, on entend respectivement en arrière et en avant du dispositif de soudage 25, par rapport à la position et au sens d'avancement dudit dispositif de soudage 25, lors de la réalisation du joint soudé depuis un bord arrière 26 jusqu'à un bord avant 27 du panneau supérieur 21.

Un procédé de soudage par friction malaxage consiste à conférer au dispositif de soudage 25 comportant un pion rétractable 29 une trajectoire de contact avec les panneaux à souder qui, au moins du côté de l'extrémité aval du joint soudé, est arrêtée en un point qui ne correspond pas strictement à l'extrémité du joint soudé.

Dans un premier mode de mise en oeuvre du procédé le dispositif de soudage effectue la soudure suivant le procédé conventionnel jusqu'au bord avant 27 du panneau supérieur 21, le pion 29 étant en position sortie, puis à partir de ce point, contrairement au procédé conventionnel dans lequel le dispositif de soudage est retiré en laissant un trou de soudure, la trajectoire du dispositif de soudage est inversée pour revenir en direction du bord arrière 26 en même temps que le pion 29 est rétracté dans le dispositif de soudage 25.

Par ce procédé, la soudure peut être réalisée aussi près du bord 27 que possible avec la profondeur requise pour obtenir les qualités voulues du joint soudé et le pion peux être rétracté sans qu'aucun trou de soudure ne subsiste.

La distance sur laquelle la trajectoire de l'outil de soudage 25 est inversée doit être suffisante pour permettre de rétracter le pion 29 dans de bonnes conditions, en pratique de 0.5 à 5 fois le diamètre de l'épaulement de l'outil de soudage 25. La valeur minimale de cette distance dépend des épaisseurs de matériaux considérés et du type de matériaux constituant les panneaux et il est avantageux de la vérifier de manière expérimentale au cas par cas.

Bien que la pénétration de l'outil de soudage au début du joint soudé soit moins critique puisque le problème du trou de soudure ne se pose pas, un procédé analogue peut avantageusement être utilisé au démarrage de l'opération de soudage. Ainsi l'outil de soudage est mis en contact avec le panneau supérieur 21 en un point situé en aval de l'extrémité 26 dudit panneau et commence par suivre une trajectoire en direction de cette extrémité 26 avant de se déplacer vers l'extrémité 27 du panneau 21 pour réaliser le joint soudé sur toute sa longueur. En suivant ce procédé au départ de la trajectoire de l'outil de soudage 25, il est possible d'amener l'outil au plus près du bord 26 du panneau supérieur 21 et d'obtenir un joint soudé de qualité homogène à partir de son extrémité de départ.

Lors des phases pendant lesquelles la trajectoire de l'outil de soudage 25 est inversée, l'outil de soudage peut avantageusement suivre une trajectoire qui se superpose à celle correspondant au joint soudé.

Dans un autre mode de mise en oeuvre, le dispositif de soudage 25 permet de souder le panneau supérieur 21 sur le panneau inférieur 20 depuis l'extrémité arrière 26 jusqu'à l'extrémité avant 27 du panneau supérieur 21.

Suivant ce procédé, l'extrémité avant 27 du panneau supérieur 21 est préparé pour former un bord s'amincissant progressivement, par exemple un bord présentant un biseau comme illustré sur la figure 3a. Dans ce cas, en arrivant au niveau du bord biseauté avant 27, le dispositif de soudage 25 est incliné de telle sorte que l'axe de rotation dudit dispositif de soudage soit maintenu sensiblement perpendiculaire à la surface libre des panneaux assemblés 20 et 21.de manière à suivre la pente dudit bord biseauté avant 27 ou les variations d'épaisseur du panneau supérieur 21 et à maintenir l'épaulement 28 dudit outil de soudage 25 en contact avec la surface du panneau supérieur 21. L'inclinaison voulue de l'axe du dispositif de soudage est réalisée sans difficulté particulière en montant le dispositif de soudage sur une broche orientable dont l'usage est courant dans le domaine de l'usinage par commande numérique en particulier. Contrairement aux procédés de soudage conventionnels, dans le présent procédé la trajectoire donnée à l'outil de soudage n'est pas limitée à la zone dans laquelle les deux panneaux 20 et 21 se recouvrent mais se poursuit sur la surface libre du panneau 20 le plus grand. Au fur et à mesure de la progression du dispositif de soudage 25 sur le bord 27 d'épaisseur variable du panneau supérieur 21, le déplacement du dispositif de soudage 25 s'accompagne d'une rétraction progressive du pion rétractable 29 de telle manière que le pion rétractable 29 continue de pénétrer dans le panneau inférieur pour assurer un malaxage correct des matériaux des deux panneaux 20 et 21. Dans une dernière phase lorsque le joint de soudure est totalement réalisé jusqu'à la limite de la partie aval de la zone de recouvrement 24, le pion est progressivement totalement rétracté au cours d'un déplacement du dispositif de soudage.

Lorsque le panneau supérieur (21) est aminci au moyen d'un biseau, l'angle du biseau doit être choisi avec une valeur suffisamment faible pour que le matériau, à l'état pâteux lors de l'opération de soudage, ne s'écoule pas en raison de la pente. La fluidité du matériau dans cette phase est donc un paramètre essentiel qui dépend des caractéristiques dudit matériau considéré. En général, la longueur du biseau sera comprise entre 5 et 15 fois l'épaisseur du panneau supérieur 21. Une longueur supérieure peut être utilisée, mais il est généralement souhaitable dé la limiter pour utiliser au mieux l'espace effectivement disponible.

Dans l'exemple représenté à la figure 3a, le pion rétractable 29 est entièrement rétracté lorsque le dispositif de soudage 25 est situé dans la zone découverte avant 23 du panneau inférieur 20. Le pion rétractable 29 continue donc d'être enfoncé dans la matière du panneau inférieur 20, au-delà de la zone de recouvrement 24, de sorte que la zone malaxée se termine dans la zone découverte avant 23. Dans un autre exemple de réalisation, il est possible de prévoir une cinématique de rétraction du pion rétractable 29 telle, que le pion rétractable 29 est entièrement rétracté lorsque le dispositif de soudage 25 arrive au bout du rebord biseauté avant 27. Ainsi, le joint soudé se termine à la jonction entre la zone de recouvrement 24 et la zone découverte avant 23 du panneau inférieur 20. Ce dernier mode de mise en oeuvre s'applique en particulier lorsque le panneau inférieur 20 ne dispose pas sur la zone découverte 23 d'un espace suffisant pour terminer le joint soudé sur ledit panneau inférieur.

Préférentiellement, la rétraction progressive du pion rétractable 29 est réalisée de manière à maintenir la profondeur d'enfoncement du pion rétractable 29 dans le panneau inférieur 20 sensiblement constante, et sensiblement égale à celle recherchée pendant la réalisation du joint soudé, sur toute la longueur du joint soudé situé dans la surface de recouvrement 24 entre le panneau supérieur 21 et le panneau inférieur 20. Ainsi; on garantit une qualité du joint soudé constante sur toute la longueur dudit joint soudé et l'intégrité des caractéristiques des panneaux 20, 21.

Dans l'exemple représenté à la figure 3b, le panneau supérieur 21 est muni d'un rebord arrière 26 qui s'amincit également progressivement, tel qu'un rebord biseauté. Il est alors possible de faire débuter le malaxage au niveau de la zone découverte arrière 22 du panneau inférieur 20. Le pion rétractable 29 du dispositif de soudage 25 pénètre tout d'abord uniquement dans le panneau inférieur 20, au niveau de la zone découverte arrière 22. Puis le dispositif de soudage 25 suit les variations d'épaisseur du panneau supérieur 21, telles que celles du bord biseauté arrière 26 dudit panneau supérieur, en respectant une inclinaison dudit dispositif 25 pour maintenir l'axe du dispositif de soudage 25 sensiblement perpendiculaire à la surface libre des pièces assemblées 20 et 21. Dans un premier temps, le pion rétractable 29 est placé dans une position telle qu'il dépasse de l'outil de soudage de la longueur correspondant à la profondeur de pénétration voulue dans le panneau inférieur 20, puis, au fur et à mesure que le dispositif de soudage 25 remonte la pente du bord biseauté arrière 26, le pion rétractable 29 est ressorti hors de l'épaulement du dispositif de soudage 25, en direction des panneaux 20, 21, de manière à traverser le panneau supérieur 21 et à continuer à pénétrer dans le panneau inférieur 20.

Avantageusement, le pion rétractable 29 est ressorti en direction des panneaux 20, 21 en fonction de la vitesse d'avancement du dispositif de soudage 25 et des variations d'épaisseur du panneau supérieur 21, afin de conserver une profondeur d'enfoncement constante du pion rétractable 29 dans l'épaisseur du panneau inférieur 20. Cette profondeur d'enfoncement constante dans le panneau 20 est avantageusement celle choisie pour la réalisation du joint soudé sur toute la longueur dudit joint soudé.

Il est également possible de faire débuter le joint soudé exactement au niveau de l'extrémité arrière de la zone de recouvrement 24, c'est-à-dire au niveau de l'extrémité arrière du bord biseauté arrière 26 du panneau supérieur 21, en particulier si les dimensions du panneau inférieur 20 limitent la possibilité de commencer le malaxage plus en amont.

Il est donc possible au moyen d'un panneau supérieur 21 dont les deux rebords, arrière 26 et avant 27, sont biseautés, d'obtenir un joint soudé allant depuis l'extrémité arrière jusqu'à l'extrémité avant dudit panneau supérieur 21. Cela garantit une bonne liaison entre les deux panneaux 20, 21 sur toute la longueur de recouvrement desdits panneaux 20, 21.

Sur la figure 4a est représenté un mode de réalisation du procédé de soudage par friction malaxage selon l'invention. Suivant ce mode particulier, la trajectoire du dispositif de soudage se termine au niveau de la zone de recouvrement 24 après avoir réalisé le joint soudé en passant par la zone découverte avant 23 du panneau inférieur 20 dont le bord avant 27 présente un amincissement progressif comme par exemple un biseau.

Pour cela, dans un premier temps, le dispositif de soudage 25 est déplacé, en suivant les mêmes étapes que dans le mode précédent de mise en oeuvre du procédé, depuis l'amont du joint soudé jusqu'à la zone découverte avant 23 du panneau inférieur 20, en passant par le bord aminci avant 27 du panneau supérieur 21. Toutefois, contrairement au mode précédent, le pion rétractable 29 n'est pas rétracté alors que le dispositif de soudage 25 est dans la zone de découverte avant 23, mais le déplacement du dispositif de soudage 25 est inversé pour ramener ledit dispositif de soudage vers la zone de recouvrement 24.

Au cours de ce déplacement suivant une direction inversée, le dispositif de soudage suit de préférence la trajectoire suivie pendant la réalisation du joint soudé pour augmenter le malaxage de la matière dans le joint soudé.

Avantageusement, lors du déplacement du dispositif de soudage 25 dans une direction inversée, on fait passer le pilotage dudit dispositif 25 depuis une consigne d'effort sur l'épaulement, vers une consigne de position sur ledit épaulement. En effet, du fait que le dispositif de soudage 25 repasse sur la trajectoire suivie pendant la réalisation du joint soudé, il y a un risque d'enfoncement de l'épaulement du dispositif de soudage 25 dans la matière déjà malaxée. Aussi, de manière à s'affranchir des modifications des caractéristiques des matériaux, on pilote l'épaulement en position plutôt qu'en effort. On impose ainsi une certaine profondeur de pénétration de l'épaulement dans le matériau, en évitant une plongée excessive dudit épaulement dans le matériau.

Le pion rétractable 29 est rétracté une première fois, lorsque le dispositif de soudage 25 descend la pente du bord aminci avant 27 du panneau supérieur 21 tout en maintenant une longueur suffisante pour que ledit pion pénètre suffisamment dans l'épaisseur du panneau inférieur 20. Lorsque la trajectoire suivie par le dispositif de soudage est inversée et que ledit dispositif remonte la pente formée par le bord aminci avant 27, le pion rétractable peut être progressivement totalement rétracté pour éviter la formation du trou de soudure.

De manière alternative, le pion rétractable 29 est à nouveau ressorti hors de l'épaulement du dispositif de soudage 25, en direction des panneaux 20, 21 au fur et à mesure qu'il remonte la pente formée par le bord aminci avant 27 de telle sorte que le pion continue à exercer le malaxage sur une profondeur importante sans toutefois pénétrer dans le panneau inférieur 20 sensiblement au-delà de la profondeur malaxée pour la réalisation du joint soudé. La rétraction finale du pion rétractable 29 est alors réalisée au niveau de la zone de recouvrement 24. L'opération de soudage est donc terminée dans la zone de recouvrement 24.

Avantageusement, ce mode de mise en oeuvre du procédé de soudage par friction malaxage est associé, au niveau du départ du joint soudé, à l'un des modes décrits consistant soit à faire réaliser au dispositif de soudage une trajectoire sur la face supérieure du panneau 21 et comportant un premier déplacement en direction du bord arrière 26 avant de réaliser le déplacement vers le bord avant 27, soit à mettre en oeuvre un panneau supérieur 21 avec un bord arrière 26 aminci et à commencer le malaxage dans la zone découverte arrière 22. De cette façon, l'extrémité avant du panneau supérieur 21 est parfaitement soudée sur le panneau inférieur 20.

Comme cela est représenté schématiquement à la figure 4b, il est également possible de commencer la réalisation d'un joint soudé en combinant les deux mouvements du dispositif de soudage déjà présentés avec un panneau supérieur (20) aminci au niveau de ses deux bords arrière et avant 26, 27.

Pour cela, on fait débuter le joint soudé dans la zone de recouvrement 24. Le dispositif de soudage 25 est dirigé depuis ce point d'ancrage initial vers la zone découverte arrière 22 du panneau inférieur 20 et suit les variations d'épaisseur et de pente du revêtement supérieur 21. La position du pion rétractable 12 est, comme déjà décrit précédemment, modifiée au cours du déplacement pour garantir le malaxage correct de la matière des panneaux 20 et 21. A partir de la zone découverte arrière 22, la trajectoire du dispositif de soudage 25 est inversée. Le dispositif de soudage 25 suit à nouveau, mais dans le sens de la montée, les variations d'épaisseur du bord arrière 26 du panneau 21 toujours en respectant une inclinaison qui maintien l'axe du dispositif de soudage 25 sensiblement perpendiculaire à la surface en contact avec l'épaulement 28 et toujours en réglant la position du pion rétractable pour que celui-ci pénètre de la profondeur voulue dans l'épaisseur des panneaux 20 et 21 puis ledit dispositif de soudage est entraîné vers le bord biseauté avant 27, de manière à poursuivre la formation du joint soudé. Arrivé au niveau du bord biseauté avant 27, le joint soudé est terminé suivant l'un des procédés décrits pour éviter la formation d'un trou de soudure.

Dans l'invention, les mouvements du dispositif de soudage lors des trajectoires dont le sens est inversé par rapport au sens de réalisation du joint soudé ne sont pas réalisés en suivant des trajectoires superposées au joint soudé mais suivant des trajectoires différentes d'orientation quelconque. Par exemple la rétraction finale du pion 29 sur une zone découverte 23 du panneau inférieur 20 est réalisée suivant une trajectoire du dispositif de soudage sensiblement parallèle au bord du panneau 20 notamment si la distance entre le bord du panneau supérieur 21 et le bord du panneau inférieur 20 n'est pas suffisante pour réaliser l'opération de rétraction de façon satisfaisante en conservant un déplacement dans le prolongement du joint soudé.

Un exemple particulier non couvert par l'invention va maintenant être donné plus en détail, au regard de l'exemple représenté à la figure 5.

Le panneau inférieur 20 est une peau d'aéronef, le panneau supérieur 21 étant un raidisseur, chacun des panneaux ayant une épaisseur d'environ 1,6 mm. Bien entendu, il est possible d'utiliser des panneaux inférieur 20 et supérieur 21 d'épaisseurs différentes.

L'alliage d'aluminium des deux éléments soudés peut être le même ou de nature différente. Par exemple dans le cas d'un soudage homogène, on peut utiliser des tôles laminées en 2024 T3 ou en 2139 T3 ou T8. Dans le cas d'un soudage hétérogène on peut utiliser une peau en tôle laminée 2139 T8 comme panneau inférieur 20 et un raidisseur en extrudé PA765 T79 (série 7000) comme panneau supérieur 21. Dans le cas du soudage hétérogène, les éléments sont préférentiellement soudés sur état thermique final d'utilisation.

Les deux panneaux 20, 21 peuvent avoir la même longueur, ou le raidisseur 21 peut être plus court que la peau 20.

Des longueurs de 200 à 1000 mm ont été soudées.

Le mode de pilotage utilisé est un pilotage en effort de l'épaulement (à 8,25 kN) et un pilotage en position du pion par rapport à la position de l'épaulement.

On procède alors selon les étapes suivantes, pendant lesquelles le dispositif) de soudage 25 est maintenu perpendiculaire à la surface des panneaux 20, 21 à souder :
- On fait débuter le soudage à 15 mm du bord arrière 26 du pied de raidisseur 21 (par rapport à l'axe du pion 29), le pion 29 étant sorti de 2 mm par rapport à la surface de l'épaulement.
- On fait avancer (A) le dispositif de soudage 25 de 10 mm vers l'arrière, c'est à dire en direction du bord arrière 26 du pied de raidisseur 21, de telle sorte que le bord d'attaque de l'épaulement 28 de diamètre 10 mm tangente le bord arrière 26 du pied de raidisseur 21.
- On inverse alors le sens d'avancement (B) du dispositif de soudage, en direction du bord avant 27 du pied de raidisseur 21, et on poursuit le soudage (C) sur toute la longueur du raidisseur 21 jusqu'à ce que le bord d'attaque de l'épaulement 28 du dispositif de soudage 25 tangente le bord avant 27 du pied de raidisseur 21.
- On inverse alors à nouveau (D) le sens d'avancement du dispositif de soudage 25, tout en rétractant progressivement le pion 29 dans le pied du raidisseur 21, sur une longueur de 10 mm. Au bout de ce parcourt de 10 mm, pendant lequel le pion 29 est rétracté progressivement, ledit pion 29 est entièrement rétracté et affleure par exemple au niveau de l'épaulement 28 du dispositif de soudage 25.

## Revendications

1. Procédé de réalisation d'un joint soudé par friction malaxage de deux panneaux (20, 21), respectivement panneau supérieur (21) et panneau inférieur (20), ledit joint soudé étant réalisé entre une première extrémité dite de début et une seconde extrémité dite de fin distincte de la première extrémité, utilisant un dispositif de soudage (25) à pion rétractable (29), ledit procédé comportant les étapes suivantes :
- positionner et maintenir les deux panneaux (20, 21) en contact suivant une zone de recouvrement (24) dans la position relative voulue après soudage,
- amener le dispositif de soudage au contact d'un ou des panneaux dans une zone à proximité d'un bord arrière de la zone de recouvrement pour former le début du joint soudé,
- souder longitudinalement les deux panneaux en déplaçant le dispositif de soudage jusqu'à un bord avant de la zone de recouvrement, pour former l'extrémité de fin du joint soudé, le joint soudé s'étendant d'un bord avant jusqu'à un bord arrière de la zone de recouvrement, **caractérisé par** les étapes suivantes :
- poursuivre le déplacement du dispositif de soudage (25) suivant une trajectoire s'étendant au-delà de l'extrémité de fin du joint soudé, ladite trajectoire étant orientée dans une direction sensiblement différente de la direction du joint soudé **et se situant dans une zone (23) découverte avant du panneau inférieur (20)**, et
- débuter la rétractation du pion rétractable (29) dans ladite trajectoire s'étendant au-delà de l'extrémité de fin du joint soudé, de manière à avoir une qualité de joint soudé constante sur toute la longueur du joint soudé et dans toute la zone de recouvrement, et à éviter l'apparition d'un trou de soudure.

2. Procédé de réalisation d'un joint soudé selon **la revendication 1,** dans lequel la trajectoire du dispositif de soudage entre l'extrémité de début de joint soudé et l'extrémité de fin de joint soudé est précédée par une portion de trajectoire prenant origine en un point de contact dudit dispositif de soudage avec l'un (20) ou les panneaux (20, 21) et aboutissant à l'extrémité de début de joint soudé.

3. Procédé de réalisation d'un joint soudé selon la revendication **2**, dans lequel la portion de trajectoire s'étendant entre le point de contact et l'extrémité de début de joint soudé est orientée dans une direction sensiblement différente de la direction du joint soudé.

4. Procédé de réalisation d'un joint soudé selon l'une des revendications 1 à 3, dans lequel l'axe du dispositif de soudage (25) est orienté pour être maintenu sensiblement perpendiculaire à la surface de contact avec l'assemblage des panneaux (20, 21) en tout point de la trajectoire dudit dispositif de soudage.

5. Procédé de réalisation d'un joint soudé selon l'une des revendications 1 à 4, dans lequel le bord avant (26) du panneau supérieur (21) est progressivement aminci, par exemple en biseau.

6. Procédé suivant la revendication 5, dans lequel le pion (29) rétractable est rétracté en fonction de la position du dispositif de soudage (25) sur le bord avant (26) aminci pour conserver une profondeur voulue de pénétration dans le panneau inférieur (20), afin de maintenir une profondeur sensiblement constante de malaxage dans l'épaisseur du panneau inférieur (20) entre l'extrémité de début et l'extrémité de fin de joint soudé.

7. Procédé suivant l'une des revendications 5 à 6, dans lequel l'axe du dispositif de soudage (25) est orienté pour être maintenu sensiblement perpendiculaire à la surface de contact avec l'assemblage des panneaux (20, 21) en tout point de la trajectoire dudit dispositif de soudage (25)

8. Procédé suivant l'une des revendications 5 à 7, dans lequel la portion de trajectoire suivie par le dispositif de soudage (25) s'étendant au-delà de l'extrémité de fin du joint soudé se situe sur une zone découverte avant du panneau (20)

9. Procédé suivant l'une des revendications 5 à 8 dans lequel le bord arrière (27) du panneau supérieur (21) est progressivement aminci, par exemple en biseau.

10. Procédé suivant l'une des revendications 5 à 9 dans lequel la longueur d'un bord progressivement aminci est comprise entre 5 et 15 fois l'épaisseur du panneau supérieur (21)

11. Procédé selon l'une des revendications 1 à 10, dans lequel le panneau inférieur (20) est un panneau de grandes dimensions dont la largeur est de même ordre de grandeur que la longueur et en ce que le panneau supérieur (21) est un panneau allongé dont le rapport entre la longueur et la largeur est au moins égal à 10.

## Claims

1. Method for making a welded joint via an friction stir welding operation for two panels (20, 21), respectively an upper panel (21) and a lower panel (20), said welded joint being made between a first end, so-called initial end, and a second end, so-called terminal end, by using a welding device (25) having a retractable pin (29), said method comprising the following steps of:
- positioning the two panels (20, 21) and maintaining them in contact with one another on a covering zone (24) in the desired relative position after the welding operation,
- bringing the welding device into contact with one panel or the panels in a zone near the back edge of the covering zone in order to form the initial part of the welded joint,
- welding the two panels in the longitudinal direction by displacing the welding device up to the front edge of the covering zone in order to form the terminal end of the welded joint, said welded joint extending from a front edge to a back edge of the covering zone, **characterized by** the following steps of:
- continuing the displacement of the welding device (25) along a path extending beyond the terminal end of the welded joint, said path being oriented in a direction substantially different from the direction of the welded joint and being located in a front uncovered zone (23) of the lower panel (20), and
- starting the retraction of the retractable pin (29) in said path extending beyond the terminal end of the welded joint so as to get a welded joint having a constant quality over all the length of the welded joint and in all the covering zone to avoid the generation of a weld hole.

2. Method for making a welded joint according to claim 1, in which the path of the welding device between the initial end of the welded joint and the terminal end of the welded joint is preceded by a portion of path from the point of contact of said welding device with one panel (20) or the panels (20, 21) and to the initial end of the welded joint.

3. Method for making a welded joint according to claim 2, in which the portion of path extending between the point of contact and the initial end of the weld joint is oriented in a direction substantially different from the direction of the welded joint.

4. Method for making a welded joint according to anyone of the claims 1 to 3, in which the axis of the welding device (25) is oriented so as to be maintained substantially perpendicular to the surface of contact with the assembly of the panels (20, 21) at any point on the path of said welding device.

5. Method for making a welded joint according to anyone of the claims 1 to 4, in which the front edge (26) of the upper panel (21) is progressively tapered, for example beveled.

6. Method according to claim 5, in which the retractable pin (29) is retracted according to the position of the welding device (25) on the tapered front edge (26) so as to keep a desired depth of penetration into the lower panel (20) in order to maintain a substantially constant stiring depth in the thickness of the lower panel (20) between the initial end and the terminal end of the welded joint.

7. Method according anyone of the claims 5 to 6, in which the axis of the welding device (25) is oriented so as to be maintained substantially perpendicular to the surface of contact with the assembly of the panels (20, 21) at any point on the path of said welding device (25).

8. Method according to anyone of the claims 5 to 7, in which the portion of path followed by the welding device extending beyond the terminal end of the welded joint is located on a front uncovered zone of the panel (20).

9. Method according to anyone of the claims 5 to 8, in which the back edge (27) of the upper panel (21) is progressively tapered, for example beveled.

10. Method according to anyone of the claims 5 to 9, in which the length of a progressively tapered edge is comprised between 5 and 15 times the thickness of the upper panel (21).

11. Method according to anyone of the claims 1 to 10, in which the lower panel (20) is a big-sized panel whose width is of the same order of magnitude as the length and the upper panel (21) is a long panel whose ratio between the length and the width is at least equal to 10.

## Patentansprüche

1. Verfahren zur Durchführung einer Schweißverbindung durch einen Rührreibschweißprozess für zwei Platten (20, 21), beziehungsweise eine obere Platte (21) und eine untere Platte (20), wobei die genannte Schweißverbindung zwischen einem ersten Ende, sogenannten Anfangsende, und einem zweiten Ende, sogenannten Schlussende, unter Verwendung einer Schweißvorrichtung (25) mit einem einziehbaren Stift (29) durchgeführt wird, wobei das genannte Verfahren die folgenden Schritte enthält:
- das Positionieren von den zwei Platten (20, 21) und ihr Kontaktieren miteinander in einer Bedeckungszone (24) in der gewünschten relativen Stellung nach dem Schweißprozess,
- das Kontaktieren der Schweißvorrichtung mit einer Platte oder den Platten in einer Zone nahe dem rückseitigen Rand der Bedeckungszone zur Durchführung des Anfangsabschnitts der Schweißverbindung,
- das Schweißen der zwei Platten in der Längsrichtung während der Verschiebung der Schweißvorrichtung bis zu einem vorderen Rand der Bedeckungszone zur Durchführung des Schlussendes der Schweißverbindung, wobei sich die Schweißverbindung von einem vorderen Rand bis zu einem rückseitigen Rand der Bedeckungszone erstreckt, **gekennzeichnet durch** die folgenden Schritte:
- das Weiterverschieben der Schweißvorrichtung (25) entlang einem über dem Schlussende der Schweißverbindung hinaus sich erstreckenden Weg, wobei der genannte Weg in einer etwa von der Richtung der Schweißverbindung verschiedenen Richtung orientiert ist, und in einer vorderen freien Zone (23) der untere Platte (20) liegt, und
- das Anfangen des Rückzugs des einziehbaren Stiftes (29) im genannten, über dem Schlussende der Schweißverbindung hinaus sich erstreckenden Weg, um eine Schweißverbindung mit einer konstante Qualität über die gesamte Länge der Schweißverbindung und in der gesamten Bedeckungszone zu erhalten, und die Erzeugung eines Schweißloches zu verhindern.

2. Verfahren zur Durchführung einer Schweißverbindung nach Anspruch 1, bei dem vor dem Weg der Schweißvorrichtung zwischen dem Anfangsende der Schweißverbindung und dem Schlussende der Schweißverbindung ein Wegabschnitt von dem Kontaktpunkt der genannten Schweißvorrichtung mit einer Platte (20) oder den Platten (20, 21) bis zum Anfangsende der Schweißverbindung angeordnet ist.

3. Verfahren zur Durchführung einer Schweißverbindung nach Anspruch 2, bei dem der Wegabschnitt zwischen dem Kontaktpunkt und dem Anfangsende der Schweißverbindung in einer etwa von der Richtung der Schweißverbindung verschiedenen Richtung orientiert ist.

4. Verfahren zur Durchführung einer Schweißverbindung nach einem der Ansprüche 1 bis 3, bei dem die Achse der Schweißvorrichtung (25) derart orientiert ist, dass sie etwa senkrecht zur Kontaktoberfläche mit dem Zusammenbau der Platten (20, 21) an jedem Punkt des Wegs der genannten Schweißvorrichtung festgehalten ist.

5. Verfahren zur Durchführung einer Schweißverbindung nach einem der Ansprüche 1 bis 4, bei dem der vordere Rand (26) der oberen Platte (21) nach und nach zugespitzt, z.B. abgeschrägt, wird.

6. Verfahren nach Anspruch 5, bei dem der einziehbare Stift (29) entsprechend der Position der Schweißvorrichtung (25) auf dem zugespitzten vorderen Rand (26) eingezogen wird, um eine gewünschte Tiefe des Durchgriffes in die untere Platte (20) zu halten, so dass eine etwa konstante Rührtiefe in der Stärke der unteren Platte (20) zwischen dem Anfangsende und dem Schlussende der Schweißverbindung gehalten wird.

7. Verfahren nach einem der Ansprüche 5 bis 6, bei dem die Achse der Schweißvorrichtung (25) derart orientiert ist, dass sie etwa senkrecht zur Kontaktoberfläche mit dem Zusammenbau der Platten (20, 21) an jedem Punkt auf dem Weg der genannten Schweißvorrichtung (25) festgehalten ist.

8. Verfahren nach einem der Ansprüche 5 bis 7, bei dem der von der Schweißvorrichtung (25) zurückgelegte, über dem Schlussende der Schweißverbindung hinaus sich erstreckende Wegabschnitt auf einer vorderen freien Zone der Platte (20) liegt.

9. Verfahren nach einem der Ansprüche 5 bis 8, bei dem der rückseitige Rand (27) der oberen Platte (21) nach und nach zugespitzt, z.B. abgeschrägt, ist.

10. Verfahren nach einem der Ansprüche 5 bis 9, bei dem die Länge eines nach und nach zugespitzten Randes zwischen 5 und 15 mal die Stärke der oberen Platte (21) beträgt.

11. Verfahren nach einem der Ansprüche 1 bis 10, bei dem die untere Platte (20) eine Großplatte ist, deren Breite in der gleichen Größenordnung wie die Länge ist, und die obere Platte (21) eine lange Platte ist, deren Verhältnis zwischen der Länge und der Breite mindestens 10 beträgt.
